# EUROPÄISCHE PATENTSCHRIFT

(11) **EP 2 208 898 B1**
(45) Veröffentlichungstag und Bekanntmachung des Hinweises auf die Patenterteilung: **16.11.2011**
(21) Anmeldenummer: 09010079.3
(22) Anmeldetag: 04.08.2009
(51) Int. Cl.: F16B 47/00

(54) **Saugfuß-Betätigungsmechanismus mit Kipphebel**
Suction foot actuation mechanism with flip switch
Mécanisme d'actionnement de pied de ventouse avec culbuteur

(30) Priorität: 14.01.2009 DE 202009000548 U
(43) Veröffentlichungstag der Anmeldung: 21.07.2010
(73) Patentinhaber: Richter, Harald, 75331 Engelsbrand (DE)
(72) Erfinder: Richter, Harald, 75331 Engelsbrand (DE)
(74) Vertreter: Gallo, Wolfgang

(56) Entgegenhaltungen:
- EP-A1- 0 306 458
- EP-A2- 0 775 462
- DE-A1- 19 608 832
- DE-U1- 29 602 411

## Beschreibung

Saugfüße finden weit verbreitete Anwendung beispielsweise für Geräteträger zum Halten von Mobiltelefonen, mobilen Navigationsgeräten, Kleincomputern und ähnlichen Geräten in Kraftfahrzeugen, wo die Gerätehalter mittels des Saugfußes beispielsweise an der Innenfläche der Windschutzscheibe befestigt werden können.

Der Betätigungsmechanismus eines solchen Saugfußes besteht üblicherweise aus einem mittig an der flexiblen Saugmembran befestigten Schaft und einem Betätigungsorgan, das sich auf der Oberseite des Saugfußgehäuse abstützt, um bei Betätigung den Schaft hoch zu ziehen und dadurch die Saugmembran in das Saugfußgehäuse hineinzuwölben, oder zum Lösen des Saugfußes den Schaft wieder nach unten zu bewegen, um die Saugmembran in eine ebene Stellung zu bringen.

Als Betätigungsorgan dient meist ein Kipphebel, der über einen Querstift mit dem Schaft verbunden ist. Dazu hat der Schaft an seinem oberen Endbereich ein Querloch, und der Kipphebel hat eine in der Draufsicht etwa U-artige Konfiguration mit zwei beiderseits des Schafts verlaufenden, mit Querbohrungen versehenen und die Enden des Querstifts aufnehmenden Schenkeln.

An das Saugfußgehäuse schließt sich oben üblicherweise eine Hülse an, die je nach Ausführungsform des Gerätehalters nur der Aufnahme und Führung des Schafts dient, oder wie bei sogenannten Schwanenhals-Haltern auch als Anschlussstück für den Schwanenhals dient. Der Querstift muß also nicht nur den Schaft hindurchpassieren, sondern auch durch an diametral gegenüberliegenden Stellen der Hülse gebildete axiale Längsschlitze, die das Durchführen des Querstifts und dessen Bewegung um eine bestimmte Distanz entlang der Hülse ermöglichen.

Die Montage des Saugfuß-Betätigungsmechanismus ist dann einigermaßen kompliziert und aufwendig. Der Schaft, an dessen unterem Ende die Saugmembran befestigt ist, muß in das Saugfußgehäuse und die Hülse eingeführt werden, dann muß der Querstift durch die entsprechenden Löcher der beiden Schenkel des Kipphebels, die Langlöcher der Hülse und das Querloch des Schafts eingeführt werden. Alle diese Teile müssen also in der richtigen Position gehalten werden, und dann ist noch zu bedenken, dass der Querstift auch noch fixiert werden muß. Dies geschieht dadurch, dass der Querstift in das Querloch des Schafts eingepresst wird, wobei der Querstift zu diesem Zweck üblicherweise mit einem eine auch elastische Verformung zulassenden Oberflächenprofil versehen wird. Gerade das notwendige Einpressen des Querstifts macht den Vorgang aber schwierig, kompliziert und aufwendig.

Aufgabe der Erfindung ist es daher, diesen Montagevorgang zu vereinfachen.

Diese Aufgabe wird durch die Anordnung nach dem Schutzanspruch gelöst.

Erfindungsgemäß ist also der Kipphebel an den Außenseiten seiner Schenkel mit geschlossenen Wänden versehen, die eine Querbewegung des Querstifts unterbinden, und die nunmehr als Sacklöcher ausgebildeten Querlöcher in den Schenkeln des Kipphebels zur Aufnahme des Querstifts sind mit radial verlaufenden Einführöffungen mit Einführschrägen versehen, die aufgrund der Materialelastizität des Kunststoffs, aus welchem der Kipphebel besteht, als Rasten wirken und mit dem Querstift eine Schnappverbindung eingehen.

Aufgrund dieser Ausbildung des Kipphebels braucht der Querstift nicht mehr in das Querloch des Schafts eingepresst zu werden, sondern es genügt ein einfaches Durchstecken, da der Querstift nicht mehr durch Presssitz oder Festsitz im Querloch des Schafts gegen seitliches Verschieben gesichert zu werden braucht, weil diese Funktion nun von den Außenwänden der Kipphebelschenkel übernommen wird.

Zu Montage des Saugfußes ist es auch nicht mehr notwendig, gleichzeitig des Schaft, das Saugfußgehäuse mit der daran befindlichen Hülse, und den Kipphebel zum Einführen des Querstifts zu haltern, sondern nur noch die beiden Komponenten Schaft und Saugergehäuse. Das Einführen des Querstifts geht dann viel leichter und viel schneller, da ein Einpressen oder Einschlagen mit einem Hammer nicht erforderlich ist, wodurch auch die sonst stets latente Gefahr der Beschädigung des Saugergehäuses vermieden wird. Nach dem Einstecken des Querstifts wird der Kipphebel einfach aufgeklipst. Dadurch ist der Querstift gegen seitliche Bewegung fixiert und die Montage ist beendet.

Ein Ausführungsbeispiel der Erfindung wird nachstehend unter Bezugnahme auf die anliegenden Zeichnungen mehr im einzelnen beschrieben, in denen zeigt:
- Fig. 1: einen schematischen Querschnitt durch einen Saugfuß-Betätigungsmechanismus,
- Fig. 2: eine perspektivische Ansicht des Saugerhebels von schräg oben, und
- Fig. 3: eine perspektivische Ansicht des Saugerhebels von schräg unten.

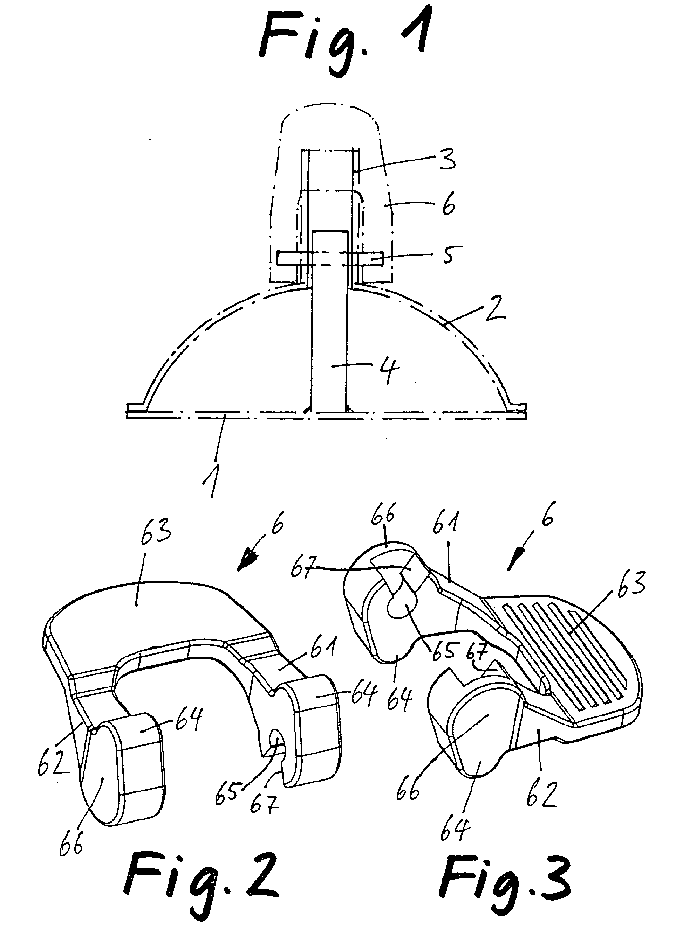

Fig. 1 zeigt schematisch einen Saugfuß-Betätigungsmechanismus. Dabei sind die Saugmembran 1 und das Saugfußgehäuse 2 mit einer angeformten Hülse 3 nur schematisch dargestellt (strichpunktiert). Der Betätigungsmechanismus selbst umfasst den mittig an der Saugmembran 1 befestigten Schaft 4, den durch ein Querloch im oberen Bereich des Schafts 4 gesteckten Querstift 5, und den Kipphebel 6, der sich mit an seinen beiden Schenkeln 61, 62 angeformten Nocken auf dem Saugfußgehäuse 2 abstützt. In Fig. 1 ist auch der Kipphebel 6 nur durch strichpunktierte Umrisslinien angedeutet, um die übrigen Komponenten nicht zu verdecken.

Die Fig. 2 und 3 zeigen in zwei perspektivischen Ansichten, nämlich von schräg oben und von schräg unten, den Kipphebel 6, woraus die Einzelheiten von dessen Ausbildung erkennbar sind.

Gemäß den Fig. 2 und 3 hat der Kipphebel 6 eine Griffplatte 63, an welche sich die beiden Schenkel 61, 62 anschließen.

An den beiden Schenkeln 61, 62 ist jeweils ein Noppen 64 angeformt, mit dem sich jeder Schenkel auf der Oberseite des Saugfußgehäuses 2 abstützt.

Jeder Schenkel 61, 62 weist ein als Sackloch ausgebildetes, von seiner Innenseite ausgehendes Querloch 65 auf, das zur Aufnahme jeweils eines Endes des Querstifts 5 dient. Weiter weist jeder Schenkel 61, 62 eine äußere, das Sackloch außen abschließende Wand 66 auf, die verhindert, dass der Querstift 5 sich seitlich nach auswärts verschieben kann.

Schließlich ist an jedem Schenkel eine in das Querloch 65 führende radiale Einführöffnung 67 gebildet, deren Seitenwände als Einführschrägen ausgebildet sind, und die an ihrer engsten Stelle schmaler ist als der Durchmesser des Querstifts 5.

Während der Schaft 4 und der Querstift 5 üblicherweise aus Metall bestehen, besteht der Kipphebel 6 aus Kunststoff. Aufgrund der Materialelastizität des Kunststoffs kann deshalb der Kipphebel 6 mit seinen beiden Schenkeln 61, 62 auf die beiderseitigen Enden des Querstifts 5 aufgeklipst werden, wenn Schaft 4 und Querstift 5 im Saugfußgehäuse 2 vormontiert sind.

Beim Ausführungsbeispiel sind die radialen Einführungsöffnungen 67 in die Sacklöcher 65 der beiden Schenkel 61, 62 als V-Öffnungen so gestaltet, dass der Kipphebel 6 etwa senkrecht zu seiner Hauptebene auf die Enden des Querstifts 5 aufklipsbar ist. Abweichend davon (nicht dargestellt) können die Einführöffnungen aber auch so gemacht werden, dass sie etwa in Längsrichtung der Schenkel 61, 62 verlaufen und von der Griffplatte 63 weg weisen und mit einer Einführrampe jeweils derart ausgebildet sind, dass beim Aufklipsen die Schenkel sich etwas elastisch nach außen spreizen und dann über den Enden des Querstifts wieder einschnappen.

## Patentansprüche

1. Saugfuß-Betätigungsmechanismus, bestehend aus einem an einer Saugmembran (1) befestigten Schaft (4), einem durch ein Querloch im von der Saugmembran (1) entfernten Endbereich des Schafts (4) verlaufenden Querstift (5), und einem Kipphebel (6) aus Kunststoff mit einer Griffplatte (63) und zwei davon wegragenden Schenkeln (61, 62) die jeweils ein Ende des Querstifts (5) aufnehmendes Querloch (65) und einen daran ausgebildeten Nocken (64) aufweisen, der sich auf der Oberseite eines Saugfußgehäuses (2) abstützt, in welchen die Saugmembran (1) hineingewölbt werden kann,
**dadurch gekennzeichnet, dass** die Querlöcher (65) der Schenkel (61, 62) des Kipphebels (6) als Sacklöcher ausgebildet und jeweils außen durch eine Wand (66) verschlossen sind, und dass jedes Sackloch mit einer radial verlaufenden Einführöffnung (67) ausgebildet ist, die durch mindestens eine Einführschräge und eine Querschnittsverringerung so konfiguriert ist, dass die Schenkel (61, 62) des Kipphebels (6) auf die Enden des Querstifts (5) aufklipsbar sind.

2. Betätigungsmechanismus nach Anspruch 1, wobei die Einführungsöffnungen (67) etwa senkrecht zur Hauptebene des Kipphebels (6) ausmünden und zwei V-förmig auswärts divergierende Seitenwände haben.

3. Betätigungsmechanismus nach Anspruch 1, wobei die Einfiihrungsöffnungen etwa in Längsrichtung der Schenkel und von der Griffplatte weg ausmünden und jeweils eine mit der Endfläche des betreffenden Querstiftendes zusammenwirkende Rampe haben, die beim Aufklipsen der Schenkel auf die Querstiftenden ein vorübergehendes Ausspreizen der Schenkel voneinander weg bewirkt.

## Claims

1. Actuating mechanism for a suction foot, consisting of a shaft (4) mounted to a suction membrane (1), a cross pin (5) passing through a transverse hole in the end region of the shaft (4) remote from the suction membrane (1), and a rocking lever (6) made of plastic and having a gripping plate (63) and two legs (61, 62) projecting away from the plate, each leg presenting a transverse hole (65) accomodating an end of the cross pin (5), and having a cam (64) formed thereon which rests against the upper face of a suction base housing (2) into which the suction membran (1) can be arched,
**characterised in that** the transverse holes (65) of the legs (61, 62) of the rocking lever (6) are implemented as blind holes and are closed on the outside by a wall (66), and **in that** each blind hole is implemented with a radially extending insertion opening (67), which is configured, by means of at least one insertion slope and a reduction of the cross section, in a way that the legs (61, 62) of the rocking lever (6) can be clipped onto the ends of the cross pin (5).

2. Actuating mechanism according to claim 1, wherein the insertion openings (67) open out to the principal plane of the rocking lever (6) in an approximately perpendicular direction and have two side walls diverging outwards in a V shape.

3. Actuating mechanism according to claim 1, wherein the insertion openings open out approximately in the longitudinal direction of the legs and facing away from the gripping plate, and each have a ramp co-operating with the end face of the corresponding cross pin end, which ramp causes a temporary spreading of the legs away from each other when the legs are clipped onto the cross pin ends.

## Revendications

1. Mécanisme d'actionnement de support à ventouse, se composant d'une tige (4) fixée sur une membrane aspirante (1), d'une broche transversale (5) passant à travers un trou transversal dans la zone extrême de la tige (4) distante de la membrane aspirante (1) et d'un levier basculant (6) en plastique comportant une plaque de préhension (63) ainsi que deux branches (61, 62) en saillie qui présentent chacune un trou transversal (65) recevant une extrémité de la broche transversale (5), ainsi qu'un ergot (64) formé dessus qui s'appuie sur la face supérieure d'un boîtier de support à ventouse (2) dans lequel la membrane aspirante (1) peut être bombée,
**caractérisé en ce que** les trous transversaux (65) des branches (61, 62) du levier basculant (6) sont réalisés sous forme de trous borgnes et sont respectivement fermés à l'extérieur par une paroi (66), et **en ce que** chaque trou borgne est conçu avec une ouverture d'insertion (67) à tracé radial qui, grâce à au moins une pente d'insertion et une réduction de section transversale, est configurée de manière à ce que les branches (61, 62) du levier basculant (6) puissent être clipsées sur les extrémités de la broche transversale (5).

2. Mécanisme d'actionnement selon la revendication 1, dans lequel les ouvertures d'insertion (67) débouchent, à peu près perpendiculairement, dans le plan principal du levier basculant (6) et présentent deux parois latérales qui divergent vers l'extérieur en forme de V.

3. Mécanisme d'actionnement selon la revendication 1, dans lequel les ouvertures d'insertion débouchent approximativement dans le sens de la longueur des branches et à distance de la plaque de préhension et présentent respectivement une rampe coopérant avec la face terminale de l'extrémité de la broche transversale concernée qui, lors du clipsage des branches sur les extrémités de la
broche, produit un écartement temporaire des branches l'une par rapport à l'autre.
